# EUROPÄISCHE PATENTANMELDUNG

(11) **EP 0 911 123 A1**
(43) Veröffentlichungstag der Anmeldung: **28.04.1999**
(21) Anmeldenummer: 98119663.7
(22) Anmeldetag: 17.10.1998
(51) Int. Cl.: B25H 1/04, B25H 1/12, B25H 3/04, E06B 9/11

(54) **Wekzeugwagen**

(30) Priorität: 22.10.1997 DE 29718758 U
(71) Anmelder: Rau GmbH, 72336 Balingen (DE)
(72) Erfinder: Rau, Herbert, D-72336 Balingen (DE)
(74) Vertreter: Ostertag, Ulrich

(57) **Zusammenfassung**

Ein Werkzeugwagen besitzt einen von Rädern (2) getragenen schrankartigen Aufbau (1), dessen Innenraum über eine durch einen Rolladen (8) verschließbare Zugangsöffnung (6) erreichbar ist. Der Rolladen (8) ist hierzu in horizontaler Richtung verschiebbar. Auf diese Weise läßt sich die vollständige Höhe des schrankartigen Aufbaus (1) z.B. für Schubladen oder andere Ausziehteile nutzen.

## Beschreibung

Die Erfindung betrifft einen Werkzeugwagen mit einem von Rädern getragenen schrankartigen Aufbau, dessen Innenraum über mindestens eine durch einen Rolladen verschließbare Zugangsöffnung erreicht werden kann.

Werkzeugwagen dieser Art enthalten in unterschiedlichen Aufbewahrungsmitteln, hauptsächlich in ausziehbaren Schubladen, unterschiedliche Werkzeuge und andere Gegenstände, die in Werkstätten benötigt werden und in diesem Werkzeugwagen mobil am jeweiligen Einsatzort des Benutzers bereitgehalten werden. Durch die Rolläden kann der Werkzeugwagen so abgeschlossen werden, daß das in ihm befindliche Werkzeug für Unbefugte nicht zugänglich ist. Bei bekannten Werkzeugwagen der eingangs genannten Art ist der Rolladen in vertikaler Richtung verfahrbar, wie dies auch bei Fensterrolläden üblich ist. Dies hat jedoch den Nachteil, daß der Innenraum des schrankartigen Aufbaues des Werkzeugwagens nicht über die volle Höhe zugänglich ist, da insoweit der Rolladen im Wege ist.

Aufgabe der vorliegenden Erfindung ist es, einen Werkzeugwagen der eingangs genannten Art so auszugestalten, daß die Zugänglichkeit zum Innenraum verbessert ist.

Diese Aufgabe wird erfindungsgemäß durch gelöst, daß der Rolladen in horizontaler Richtung verschiebbar ist.

Erfindungsgemäß läßt sich also der Rolladen in seitlicher Richtung vollständig aus der Zugangsöffnung des schrankartigen Aufbaues herausschieben, so daß die vollständige Höhe des schrankartigen Aufbaues z. B. für Schubladen oder andere Ausziehteile genutzt werden kann. Auf diese Weise wird kein Raum verschenkt; die im Werkzeugwagen untergebrachten Gegenstände lassen sich besser erreichen.

Bei einer vorteilhaften Ausführungsform der Erfindung ist der Rolladen in Profilschienen geführt, die an den Innenseiten der Bodenplatte und der Oberplatte des Aufbaues angebracht sind.

Bestimmte Werkzeugwagen sind so gestaltet, daß sie nur eine Zugangsöffnung und an der dieser gegenüberliegenden Seite eine Rückwand aufweisen. Bei diesen Werkzeugwagen, die ein Ausziehen der Schubladen nur in einer Richtugn gestatten, empfiehlt es sich, wenn der Rolladen entlang der Wangen neben die Rückwand schiebbar ist. Die einzige Zugangsöffnung läßt sich auf diese Weise vollständig freigeben; der Rolladen nimmt innerhalb des Aufbaues nur einen minimalen Platz ein.

Andere Modelle von Werkzeugwagen besitzen an gegenüberliegenden Seiten des schrankartigen Aufbaues jeweils eine Zugangsöffnung. Die im Innenraum des Aufbaues befindlichen Aufbewahrungsmittel, z. B. Schubladen, können dann in entgegengesetzten Richtungen aus dem Innenraum herausgezogen werden. Hier empfiehlt sich eine Ausgestaltung der Erfindung, bei welcher die den Zugangsöffnungen zugeordneten Rolläden neben den Wangen des Aufbaues im wesentlichen parallel zu diesen aufwickelbar sind.

Ein Ausführungsbeispiel der Erfindung wird nachfolgend anhand der Zeichnung näher erläutert; es zeigen
- Figur 1: die perspektivische Ansicht eines Werkzeugwagens, teilweise geöffnet;
- Figur 2: den Werkzeugwagen von Figur 1, jedoch vollständig geschlossen;
- Figur 3: eine schematische Draufsicht auf den Boden des Aufbaues des Werkzeugwagens der Figuren 1 und 2.

Der in der Zeichnung dargestellte Werkzeugwagen umfaßt einen schrankartigen Aufbau 1, der von vier Rädern 2 getragen wird. Der Korpus des Aufbaues 1 besteht aus zwei seitlichen Wangen 3, einer Bodenplatte 4 und einer Oberplatte 5. Die beiden Wangen 3, die Bodenplatte 4 und die Oberplatte 5 begrenzen auf gegenüberliegenden Seiten des Aufbaues 1 rechteckige Zugangsöffnungen 6, über welche von beiden Seiten her der Innenraum des Aufbaues 1 zugänglich ist.

Im Innenraum des Aufbaues 1 befinden sich verschiedene Aufbewahrungsmittel, z. B. Schubladen 7 und eine vertikal stehende Lochplatte 8, die nach beiden Seiten über die Zugangsöffnungen 6 in vollem Umfange ausgezogen werden können. Die genaue Art und Ausgestaltung dieser Aufbewahrungsmittel sind im vorliegenden Zusammenhang ohne Interesse.

Die beiden Zugangsöffnungen 6 des Aufbaues 1 lassen sich durch zwei Rolläden 8 verschließen. Diese sind entgegen der üblichen Bewegungsrichtung von Rolläden nicht in vertikaler sondern in horizontaler Richtung verschiebbar angeordnet. Hierzu sind sie an ihrer oberen und unteren horizontalen Kante in Profilschienen 9 geführt, die sich an den Innenflächen der Bodenplatte 4 und der Oberplatte 5 befinden.

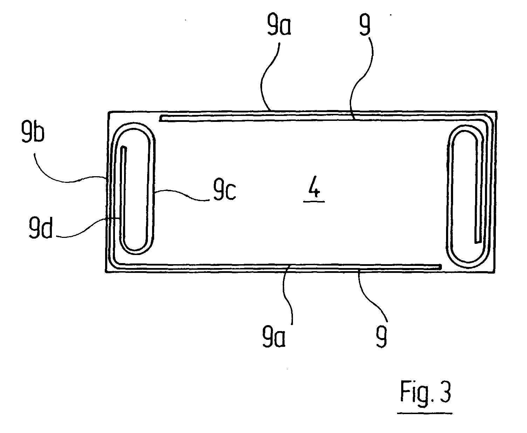

Die genaue Führung der Profilschienen 9 ist in Figur 3 dargestellt, welche eine Draufsicht auf die Bodenplatte 4 zeigt. Die Profilschienen 9 an der Innenseite der Oberplatte 5 entsprechen dieser Ausgestaltung.

Wie Figur 3 zu entnehmen ist, verlaufen die Profilschienen 9 mit einem Abschnitt 9a in geringem Abstand von der Längskante der Bodenplatte 4 und damit entlang der Zugangsöffnung 6. Die Führungsschienen 9 biegen dann an den Schmalkanten der Bodenplatte 4, also im Bereich der Wangen 3 des Aufbaues 1, mit einem zweiten, entsprechend kürzeren Abschnitt 9b um. Über eine halbkreisförmige Krümmung ist die Profilschiene 9 in einem weiteren Abschnitt 9c parallel zum Abschnitt 9d wieder in Richtung auf den Abschnitt 9a geführt, macht erneut eine Wendung um etwa 180° und läuft in einem Abschnitt 9d aus, der sich wiederum parallel zum Abschnitt 9b, in engem Abstand von diesem, erstreckt. Der der Schmalkante der Bodenplatte 4 benachbarte Bereich der Profilschiene 9 ist also "schneckenförmig" aufgewickelt; die gesamte Profilschiene 9 ähnelt einer aufgebogenen Büroklammer.

Der oben beschriebene Werkzeugwagen funktioniert wie folgt:

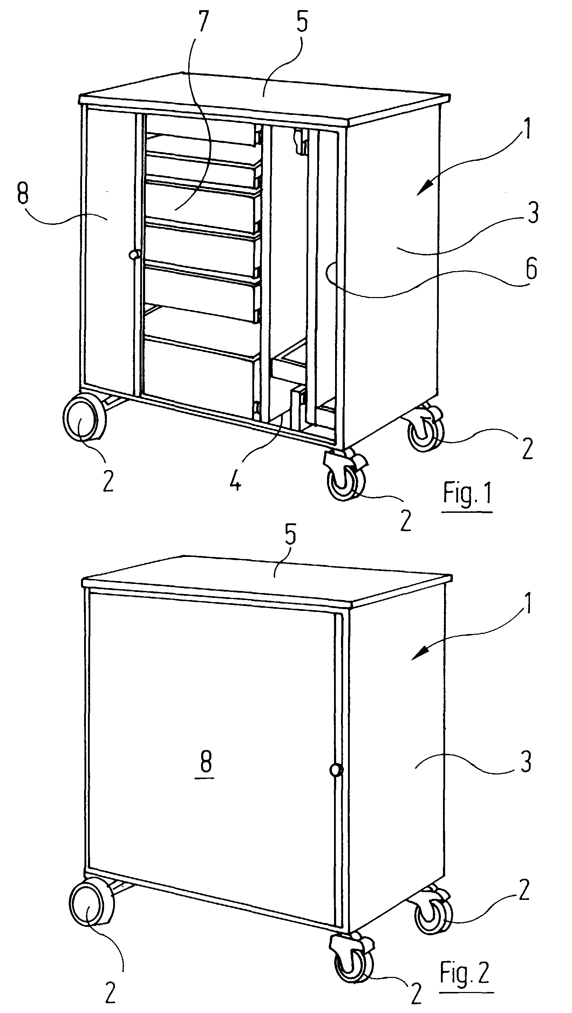

In geschlossenem Zustand, der in Figur 2 dargestellt ist, erstreckt sich der Rolladen 8 über die gesamte zugeordnete Zugangsöffnung 6 des Aufbaues 1, so daß diese Zugangsöffnung 6 vollständig geschlossen ist. Zum Öffnen einer Zugangsöffnung 6 wird der entsprechende Rolladen 8 horizontal verschoben, derart, daß er sich in die Bereiche 9b, 9c, 9d der Profilschiene 9 hineinschiebt und sich dabei, den Wangen 3 des Aufbaues 1 benachbart, aufwickelt. Bei dieser Bauweise können beide gegenüberliegende Zugangsöffnungen 6 unabhängig voneinander und in voller Höhe geöffnet bzw. geschlossen werden.

## Patentansprüche

1. Werkzeugwagen mit einem von Rädern getragenen schrankartigen Aufbau, dessen Innenraum über mindestens eine durch einen Rolladen verschließbare Zugangsöffnung erreicht werden kann,
dadurch gekennzeichnet, daß
der Rolladen (8) in horizontaler Richtung verschiebbar ist.

2. Werkzeugwagen nach Anspruch 1, dadurch gekennzeichnet, daß der Rolladen (8) in Profilschienen (9) geführt ist, die an den Innenseiten der Bodenplatte (4) und der Oberplatte (5) des Aufbaus (1) angebracht sind.

3. Werkzeugwagen nach Anspruch 1 oder 2, bei welchem der Aufbau an nur einer Seite eine Zugangsöffnung und an der dieser gegenüberliegenden Seite eine Rückwand aufweist, dadurch gekennzeichnet, daß der Rolladen an den Wangen entlang neben die Rückwand schiebbar ist.

4. Werkzeugwagen nach Anspruch 1 oder 2, bei welchem der Aufbau an gegenüberliegenden Seiten jeweils eine Zugangsöffnung aufweist,
dadurch gekennzeichnet, daß die den Zugangsöffnungen (16) zugeordneten Rolläden (8) neben den Wangen (3) des Aufbaus (1), im wesentlichen parallel zu diesen, aufwickelbar sind.
